(19) **Europäisches Patentamt**

**European Patent Office**

**Office européen des brevets**

(11) **EP 1 413 071 B1**

(12) **EUROPEAN PATENT SPECIFICATION**

(45) Date of publication and mention
of the grant of the patent:
**23.08.2006 Bulletin 2006/34**

(51) Int Cl.:
*H04B 7/26* *(2006.01)*      *H04B 7/212* *(2006.01)*

(21) Application number: **02745347.1**

(86) International application number:
**PCT/EP2002/006062**

(22) Date of filing: **03.06.2002**

(87) International publication number:
**WO 2003/010902 (06.02.2003 Gazette 2003/06)**

(54) **WIRELESS COMMUNICATION SYSTEM, WIRELESS COMMUNICATION UNIT AND METHOD OF SYNCHRONISATION**

FUNKÜBERTRAGUNGSSYSTEM, FUNKÜBERTRAGUNGSEINHEIT UND VERFAHREN ZUR SYNCHRONISATION

SYSTEME ET UNITE DE COMMUNICATION SANS FIL ET PROCEDE DE SYNCHRONISATION

(84) Designated Contracting States:
**AT BE CH CY DE DK ES FI FR GB GR IE IT LI LU MC NL PT SE TR**
Designated Extension States:
**RO SI**

(30) Priority: **20.07.2001 GB 0117782**

(43) Date of publication of application:
**28.04.2004 Bulletin 2004/18**

(73) Proprietor: **MOTOROLA, INC.**
**Schaumburg, IL 60196 (US)**

(72) Inventors:
• **ROETTGER, Norbert**
**56479 Waldmuehlen (DE)**
• **PAI, Klaus**
**65329 Hohenstein (DE)**

(74) Representative: **McCormack, Derek James et al**
**Optimus**
**Grove House, Lutyens Close,**
**Chineham Court,**
**Basingstoke,**
**Hampshire RG24 8AG (GB)**

(56) References cited:
**US-A- 5 694 392         US-A- 5 943 326**

**Description**

Field of the Invention

This invention relates to synchronisation in a communication system. The invention is applicable to, but not limited to, a wireless communication unit synchronising its communication between two wireless communication systems.

Background of the Invention

Wireless communication systems, for example cellular telephony or private mobile radio communication systems, typically arrange radio telecommunication links between a number of subscriber units.

Wireless communication systems are distinguished over fixed communication systems, such as the public switched telephone networks (PSTN), principally in that subscriber units move between communication service areas and service providers. In doing so, the subscriber units encounter varying radio propagation environments. As a consequence, the quality of a communication link to/from a subscriber unit varies as the subscriber unit changes location.

The subscriber units are typically either vehicular-mounted 'mobile' or 'hand-portable' radio or cellular units. The subscriber units may be voice-only, data-only or a mixed voice/data wireless communication unit. In the context of the present invention, data includes signalling information, system parameter information, video, image and/or multimedia traffic. Henceforth, the term mobile station (MS) will be used for all such subscriber units.

In a wireless communication system, there are typically two methods of communicating to a MS. A first method is a direct communication between two MSs. A second method uses an intermediary station to forward the communication, either from a base transceiver station (BTS) or a MS. The intermediary station may be a BTS connected to the communication system infrastructure. A BTS is generally considered an "intelligent" terminal, as it has the processing and control capability that influences a substantial amount of the communication traffic passing through it.

A further intermediary station is a radio Repeater station, which performs a minimal amount of processing in receiving a communication from a first MS and re-transmitting the received communication to at least one second MS. As a Repeater station has little control over the communication traffic passing through it, it is often termed a 'dummy' terminal.

Methods exist for communicating information simultaneously, where communication resources in a communication network are shared by a number of users. Such methods are termed multiple access techniques. A number of multiple access techniques exist, whereby a finite communication resource is divided into any number of physical parameters, such as:

(i) frequency division multiple access (FDMA), whereby the total number of frequencies used in the communication system are shared,
(ii) time division multiple access (TDMA) whereby each communication resource, say a frequency channel used in the communication system, is shared amongst users by dividing the resource into a number of distinct time periods (timeslots, frames, etc.), and
(iii) code division multiple access (CDMA) whereby communication is performed by using all of the respective frequencies, in all of the time periods, and the resource is shared by allocating each communication a particular code, to differentiate desired signals from undesired signals.

Within such multiple access techniques, different duplex (two-way communication) paths are arranged. Such paths can be arranged in a frequency division duplex (FDD) configuration, whereby a first frequency is dedicated for up-link communication and a second frequency is dedicated for down-link communication. In such situations, a down-link communication channel generally refers to the communication link from a BTS or a Repeater to a MS. Conversely, an up-link communication channel generally refers to the communication link from a MS to a BTS or a Repeater. Alternatively, the paths can be arranged in a time division duplex (TDD) configuration, whereby a first time period is dedicated for up-link communication and a second time period is dedicated for down-link communication.

In a wireless communication system, each BTS has associated with it a particular geographical coverage area (or cell). The coverage area is defined by a particular geographic range where the BTS can maintain acceptable communications with MSs operating within its serving cell. Often these cells combine to produce an extensive coverage area.

In a wireless private mobile radio (PMR) communication system, it is known that a MS may operate outside of a dedicated network coverage area by communicating in a direct communication link with at least one other MS. Such a communication mode is generally referred to as Direct Mode Operation (DMO). This term is in contrast to Trunked mode operation (TMO) that enables the MS to work within a network's coverage, with communications to/from the MS controlled and facilitated by a switching and management infrastructure (SwMI). Hence, when a MS operates in DMO, there is no system controller and therefore no centralised timing synchronisation or infrastructure-controlled power control facility to help minimise interference.

DMO is similar to the back-to-back operation of conventional half-duplex two-way radio schemes used by many existing private mobile radio (PMR) systems, such as that of the emergency services. DMO communications are limited in range due to regulatory limitations, such as maximum transmit power or channel conditions, placed on the MS.

When operating in DMO, MSs communicate over dedicated frequencies. A MS operating in DMO may manually select a dedicated frequency. Alternatively, the MS may scan the available dedicated frequencies to find an available frequency based on signal strength measurements. In some direct mode environments there may be a pool of communication channels available.

A direct mode Repeater provides a more extensive communication service for MSs capable of direct mode operation, by facilitating communication over an increased coverage area. This enables two MSs to communicate, which would have been out of transmitting range of each other without the repeater. Furthermore, such DMO communications have been used to supplement the coverage range of a trunked mode system. Direct mode repeaters may operate using either a single frequency or two frequencies.

Such an extended coverage range is typically considered useful for rural geographical areas, where installation of trunked mode infrastructure is not commercially justified.

A known technique, for communication via a Repeater, has been defined by the European Telecommunication Standards Institute (ETSI) in the TErrestrial Trunked RAdio (TETRA) standard in ETS-300-396-4.

According to the TETRA DMO standard, all MSs working through a DMO Repeater station will monitor down-link transmissions from the Repeater in order to receive calls via the Repeater. The down-link transmission is basically a repeated and delayed version of the corresponding up-link transmission.

Use of a repeater in direct mode operation within a TETRA network is disclosed in e.g. US-A-5943326.

A typical physical realisation used for a repeater station is a "piggy-backed" MS, often termed a "mobile repeater". A mobile repeater is generally constructed by coupling two independent MS together, sometimes within a single case. One MS is used for communication with the first radio system, say a trunked mode system, and the second MS is used for communication with the second radio system, say a DMO system.

It is known that the two radios may be coupled together using a standard data link, for example a RS-232 cable. In operation, such a link routes incoming data from the receiving MS to the transmitting MS, where it is transmitted at the next available opportunity, for example one of the next slots in a TDMA-based system.

This configuration with two MS in a box needs frequency synchronisation of the MS's reference oscillator to ensure that the transmitting MS is transmitting on the frequency to which the receiving MS is synchronised. The closest known technology for synchronising MSs is the use of a coax cable that routes the receiving MS's reference frequency to the transmitting MS.

In a TETRA low cost repeater/gateway application, such an approach requires customised hardware, for example an additional coaxial cable and connector, which increases the cost of the standard mobile radio. In summary, the use of a physical, electrical or electro-mechanical connection between the MS, in order to synchronise the parts of the repeater to the two communication systems, adds extra product cost.

Thus, there currently exists a need to provide a communication system, a wireless communication unit, particularly a repeater unit, and a method of synchronisation in a wireless communication unit, where the aforementioned disadvantages may at least be alleviated.

Statement of Invention

In accordance with a first aspect of the present invention there is provided a method of synchronising as claimed in claim 1. In accordance with a second aspect of the present invention there is provided a wireless communication unit as claimed in claim 12. In accordance with a third aspect of the present invention there is provided a communication system as claimed in claim 13. In accordance with a fourth aspect of the present invention there is provided a storage medium as claimed in claim 14. In accordance with a fifth aspect of the present invention there is provided a wireless communication unit as claimed in claim 15. In accordance with a sixth aspect of the present invention there is provided a communication system as claimed in claim 22.

Brief Description of the Drawings

Exemplary embodiments of the present invention will now be described, with reference to the accompanying drawings, in which:

FIG. 1 shows a block diagram of a communication system offering two modes of operation, and adapted to support the various inventive concepts of a preferred embodiment of the present invention;
FIG. 2 shows a timing diagram illustrating a known timing process that can be adapted in the radio communication system of FIG. 1 to facilitate the inventive concepts of a preferred embodiment of the invention;

FIG. 3 shows a block diagram of a subscriber unit adapted to support the inventive concepts of the preferred embodiments of the present invention; and

FIG. 4 shows a flowchart of the decision making process for synchronising in accordance with a preferred embodiment of the invention.

Description of Preferred Embodiments

In summary, in accordance with a preferred embodiment of the invention, a method of synchronising a wireless communication unit to a radio communication system is described. In particular, the inventors of the present invention have recognised the opportunity, and associated benefits thereby provided, to provide a wireless link between the transmitter and receiver parts of a mobile repeater. With this approach the repeater can be implemented using two standard MSs, and does not need customised hardware or interfaces.

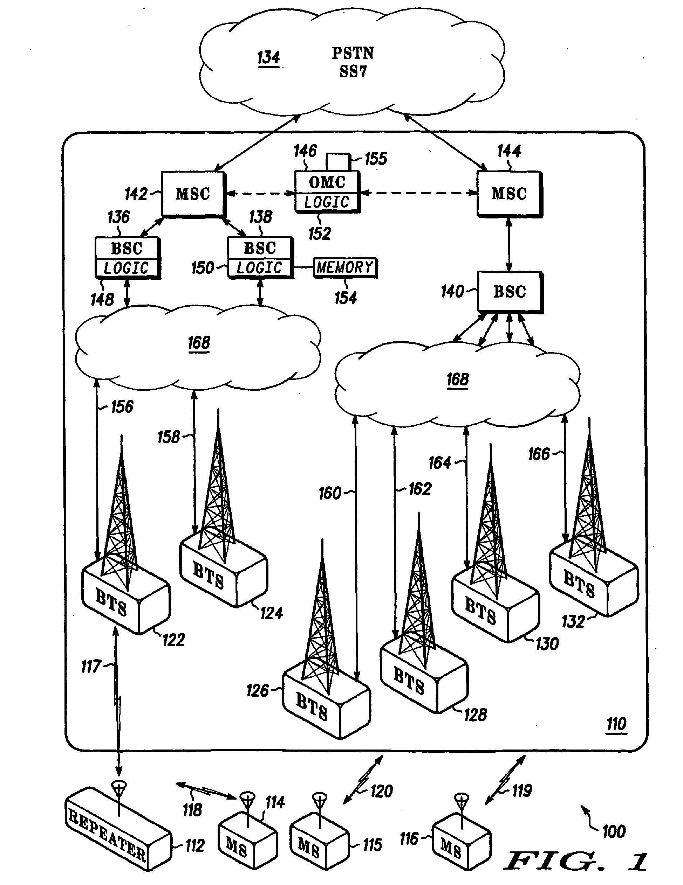

Referring first to FIG. 1, a radio communication system 100, supporting a TErrestrial Trunked RAdio (TETRA) air-interface, is shown in outline, in accordance with a preferred embodiment of the invention. The TETRA air-interface has been defined by the European Telecommunications Standards Institute (ETSI).

The radio communication system 100, supports both trunked mode operation (TMO) and direct mode operation (DMO). A repeater (or gateway) 112 is provided to link these two modes of operation for mobile stations such as MS 114.

A plurality of subscriber units, such as a mixture of MSs 114-116 and fixed terminals (not shown), communicate 117-120 over the selected air-interface with a plurality of base transceiver stations (BTS) 122-132. MS 114 is shown communicating to the TETRA trunked infrastructure 110 via a repeater 112. A limited number of MSs 114-116 and BTSs 122-132 are shown for clarity purposes only.

The system infrastructure in a TETRA system is generally referred to as a switching and management infrastructure (SwMI) 110. This contains substantially all of the system elements, apart from the mobile units. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTS 122-132 communicate 156-166 with the rest of the trunking system infrastructure via a frame relay interface 168.

Each BSC 136-140 may control one or more BTSs 122-132, with BSCs 136-140 generally interconnected through MSCs 142-144. Each BSC 136-140 is therefore able to communicate with one another, if desired, to pass system administration information therebetween. BSCs 136-140 are responsible for establishing and maintaining control channels and traffic channels to serviceable MSs 112-116 affiliated therewith. The interconnection of BSCs 136-140 allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, include control logic 148-152, with the various system elements usually having associated memory 154 (shown only in relation to BSC 138 for the sake of clarity). The memory typically stores historically compiled operational data as well as in-call data, system information and control algorithms.

In accordance with a preferred embodiment of the present invention, signal transmissions from the BTS 122 in the SwMI 110, indicate communication resource information on traffic channels (TCH), signalling channels (SCH), carrier frequencies, timeslots etc.

In the trunked TETRA mode of operation, MSs 114-116 align their reference frequency to the downlink signal received from the TETRA BTS 122 before they start transmitting in a TDMA slotted mode. The BTS 122 acts as the system's frequency reference.

The Repeater 112 has been adapted, in accordance with the preferred embodiment of the invention, to receive and use such information in order to wirelessly synchronise a receiver chain to the system's frequency and/or timing. The repeater also facilitates a transmission of a reference frequency during a signalling period, to allow the repeater to compare the operating frequency/timing of the transmitter chain within the repeater 112, to the system's frequency and/or timing.

The Repeater 112 specified within the TETRA standard is regenerative, i.e. it decodes and re-encodes received speech and signalling bursts which it receives (one slot's worth each time), to improve the overall link performance.

In accordance with the preferred embodiment of the invention, the receiver portion of the repeater 112 monitors the frequency offset of the reference oscillator of the transmitter portion of the repeater 112 during as many transmissions as is feasible or desirable. In this embodiment, the repeater's transmissions that are monitored by the receiver portion, may include signalling or traffic communication in frequency channels and/or time slots.

In the preferred embodiment of the invention, the synchronisation opportunity can be performed in any transmit period, in particular any linearisation period, such as at the beginning of each transmit slot and/or in the system allocated common linearisation channel (CLCH). In such a manner, with comparing the transmitter's frequency and/or timing with the system's frequency and/or timing, the actual offset frequency $f_o$ is always known, where:

$$f_O = f_{ref} (tx) - f_{ref} (rx) \qquad (1)$$

The receiver portion of the repeater 112 adapts its reference oscillator in a similar manner to receiving a communication from any other MS, in response to monitoring its serving BTS' transmit signal. However, the receiver portion of the repeater 112 time-synchronises itself to the TETRA protocol. Furthermore, it is within the contemplation of the invention that the receiver portion may send TETRA absolute frequency and/or frame timing information to the transmitter portion.

In such an embodiment, the transmit portion of the repeater 112 decodes the TETRA frame timing information and preferably transmits on the next available transmit period to enable the receiver portion to synchronise. The receiving portion can then compare the transmit frequency and/or frame timing information and inform the transmit portion of any adjustments that are needed. During this synchronisation procedure the receiver portion of the repeater 112 monitors the repeater's transmissions on its receiver frequency ($f_{ref}$ rx).

The frequency offset of the transmit portion causes a proportional frequency shift ($f_o$) in the I/Q signal of the receiver portion, so that the receiver portion is able to measure the frequency offset between the two radio portions, where:

$$f_O = f_{TX} - f_{RX}. \qquad (2)$$

In the preferred embodiment of the invention, the process uses the same software routines as a standard TETRA MS would use to align its reference to the BTS's system transmissions.

It is also within the contemplation of the invention that once the frequency offset between the receiver portion of the repeater 112 and the transmitter portion of the repeater 112 is known, the offset is corrected in the transmitter portion. Preferably, the receiver portion transmits a frequency offset message via say, a RS-232 serial interface to the transmit portion. However, it is within the contemplation of the invention that any other suitable means, for example a wireless link, can be used.

In the preferred configuration, the repeater 112 constitutes only specific RF circuitry, namely no transmitter circuitry in the receiver portion and no receiver circuitry in the transmitter portion. Such a configuration minimises the component cost within a repeater. Clearly, the inventive concepts of the present invention work particularly with independent transmitter and receiver portions, such as a back-to-back (dual) MS repeater configuration where a transmitter from a first MS is coupled to a receiver of the second MS to constitute the repeater.

In a gateway configuration, namely where the repeater 112 acts as a link between the trunked system and a DMO system to extend the coverage range of the trunked system, the receiver portion would first synchronise on the down-link BTS signal as described above. In contrast, with a standard repeater configuration in a DMO repeater mode, the receiver portion would synchronise on the call-initiating TETRA MS.

More generally, any re-programming of a repeater 112 according to the preferred embodiment of the present invention may be implemented in any suitable manner. For example, new apparatus may be added to a conventional repeater terminal 112, or alternatively existing parts of a conventional wireless communication unit may be adapted, for example by reprogramming one or more processors therein. As such the required adaptation may be implemented in the form of processor-implementable instructions stored on a storage medium, such as a floppy disk, hard disk, PROM, RAM or any combination of these or other storage multimedia.

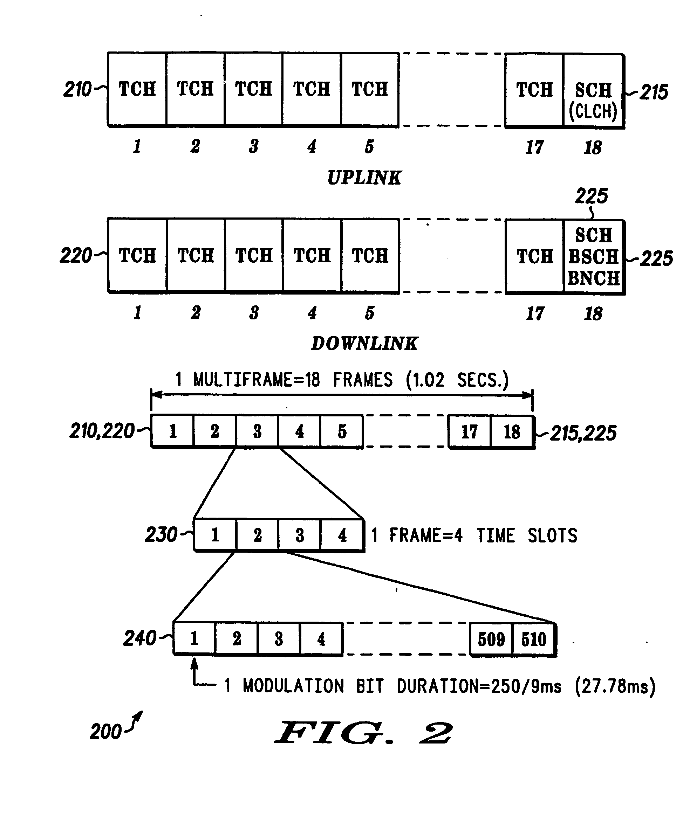

Referring now to FIG. 2, the synchronisation concept is described with reference to the TETRA timing structure, which uses a TDMA protocol 200. The timing structure is arranged in super-frames, with each super-frame comprising eighteen (rolling) time-frames. Time-frames one to seventeen 210, 220 are dedicated for traffic communication on each down-link and up-link frequency channel. Time-frame eighteen 215 is dedicated as a signalling channel on the up-link and down-link channel, with a sub-slot of the eighteenth frame on the up-link channel allocated as a common linearisation channel (CLCH) sub-slot. The CLCH is a dedicated time period on a signalling channel where all communication units can linearise their transmissions, without interfering with normal transmissions. The eighteenth frame on the down-link channel 225 is dedicated as a signalling channel (SCH), a broadcast signalling channel (BSCH) or a broadcast network channel (BNCH).

Each traffic time frame is shown as divided into four timeslots 230, shown in relation to one time-frame for clarity purposes only. Each traffic time-slot includes 510 bit periods 240.

The invention has been described such that the synchronisation uses any transmit period of the repeater, for example the repeatedly available CLCH frame for synchronisation instead of linearisation purposes. However, it is within the contemplation of the invention that any other suitable time-slot, time-frame or channel can be used, such as a slot or sub-slot of frame eighteen in a downlink period when allocated as a BSCH.

The invention is described with reference to the TETRA standard, and in particular the TETRA DMO repeater aspect when extending the trunked system by coupling a DMO communication protocol via a DMO repeater. However, it is within the contemplation of the invention that the inventive concepts described herein apply to any fixed or wireless communication system where two modes of communication are provided.

It is also within the contemplation of the invention that any number of alternative timing configurations would benefit from the inventive concepts described herein.

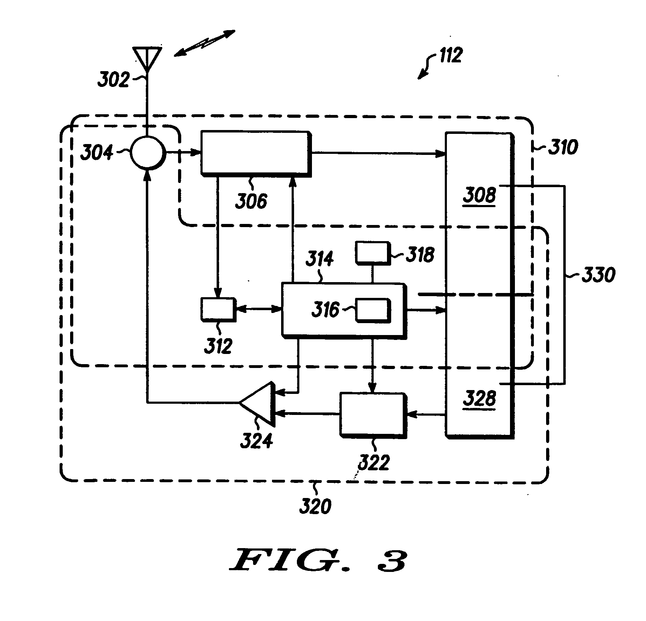

Turning now to FIG. 3, a block diagram of a repeater unit 112, adapted to support the inventive concepts of the preferred embodiments of the present invention, is shown. For the sake of clarity, the repeater 112 is shown as divided into two distinct portions - a receiver portion 310 and a transmit portion 320. In practice the receiver portion, with associated processor, control and memory circuitry would be within a first MS in a back-to-back MS repeater unit. The transmitter portion, with associated processor, control and memory circuitry would be within a second MS in a back-to-back MS repeater unit.

The repeater unit 112 contains an antenna 302, preferably coupled to an antenna switch 304 that provides signal control of radio frequency (RF) signals in the repeater unit 112, as well as isolation between receive chain 310 (of the first MS) and transmit chain 320 (of the second MS.

Clearly, the antenna switch 304 could be replaced with a duplex filter or circulator, as known to those skilled in the art.

The receiver chain 310 further includes scanning receiver front-end circuitry 306 (effectively providing reception, filtering and intermediate or base-band frequency conversion). The scanning front-end circuitry 306 scans for signal transmissions from:

(i) a BTS wishing to communicate with a MS or
(ii) a MS wishing to communicate with another MS in DMO mode or
(iii) a MS wishing to communicate into the trunked communication system.

The scanning front-end circuitry 306 is serially coupled to a signal processing function (generally realised by at least one digital signal processor (DSP)) 308.

A controller 314 is operably coupled to the scanning front-end circuitry 306 so that the receiver can calculate receive bit-error-rate (BER) or frame-error-rate (FER) or similar link-quality measurement data from recovered information, via a received signal strength indication (RSSI) 312 function. The RSSI 312 function is operably coupled to the scanning front-end circuitry 306. However, as is known in the art, such an RSSI calculation may be performed in any suitable element of the radio unit, for example signal processing function 308. The memory device 316 stores a wide array of data, such as decoding/encoding functions and the like, as well as link quality measurement information, to enable an optimal communication link to be selected.

A timer 318 is operably coupled to the controller 314 to control the timing of operations, namely the transmission or reception of time-dependent signals, within the repeater 112.

In accordance with a preferred embodiment of the invention, the signal processing function 308 coupled to the controller 314 has been adapted to enable a receiving MS to receive and process timing information from the trunked system, and pass such information to the transmitting portion 320. The signal processing function 308 and the controller 314 have also been adapted to enable the transmitter portion 320 to send a frequency timing signal to the receiving portion 310, and process such a signal to determine any frequency offset that may exist between the transmitter portion 320 and receiving portion 310, if they are not synchronised.

In the context of the preferred embodiment of the present invention, timer 318 is used to synchronize the receiving portion 310 of the repeater 112 to the timing dictated by the SwMI 110. Furthermore, the signal processor 308 in the receiver chain also compares the operating frequency and/or timing of the system, with that of the transmitter portion (of the repeater or second MS of the repeater dependent upon the configuration used).

As regards the transmit chain 320, this essentially includes a signal processor 308 (in the described repeater, this is the same processor as the receiver chain), transmitter/ modulation circuitry 322 and a power amplifier 324. The signal processor 308, transmitter/modulation circuitry 322 and the power amplifier 324 are operationally responsive to the controller, with an output from the power amplifier coupled to the antenna switch 304, as known in the art.

The transmit chain 320 in repeater 112 has been adapted to transmit a frequency determination signal during each or any transmit activity of the radio unit, preferably during a linearisation period, the CLCH, or other pre-determined time-slot, time frame or frequency channel. The receiver portion 310 of the repeater 112 monitors the frequency offset of the transmitter portion 320 reference oscillator to its own reference oscillator during each transmission, where (as

mentioned earlier):

$$F_O = f_{ref} \ (tx) - f_{ref} \ (rx) \qquad (3)$$

The actual $F_O$ is then always known.

If the receiving portion 310 receives a signal then it adapts its reference oscillator in a similar manner to any other mobile subscriber. Furthermore, the receive portion sends frequency adapt data via RS-232 link 330 to the transmitting portion 320 of the repeater 112 before the transmitting portion 320 starts to transmit. The offset frequency $F_O$ information from the frequency adapt data is taken into account when aligning the transmitter reference oscillator to the correct frequency. All frequency adjustments are typically based upon a common reference oscillator frequency of, say, 16.8 MHz.

The frequency-offset characteristic is dependent upon, inter-alia, temperature. Preferably, such temperature information is stored in memory device 316 as a $F_O$ look-up table. The values in the $F_O$ look-up table can be then used in any subsequent self-tuning routine. Furthermore, it is within the contemplation of the invention that the $F_O$ look-up table can be dynamically updated in a self-learning, self-synchronising mode of operation.

It is noteworthy that some isolation of the receiver portion 310 is required when transmitting from the transmitter portion 320, to prevent overloading of the active amplifier elements in the receiver chain (not shown). Such isolation is provided by the antenna switch, together with, say, switchable attenuators within the scanning front-end circuitry 306. Further isolation can be provided within any intermediate frequency (IF) circuitry path and any automatic gain control (AGC) function of the receiver chain 310.

The signal processor function 328 in the transmit chain is typically implemented as distinct from the signal processor function 308 in the receive chain, as shown in FIG. 3. Alternatively, a single processor 308 may be used to implement processing of both transmit and receive signals.

It is also within the contemplation of the invention that the various components within the repeater 112 can be realised in discrete or integrated component form, with an ultimate structure therefore being merely an arbitrary selection.

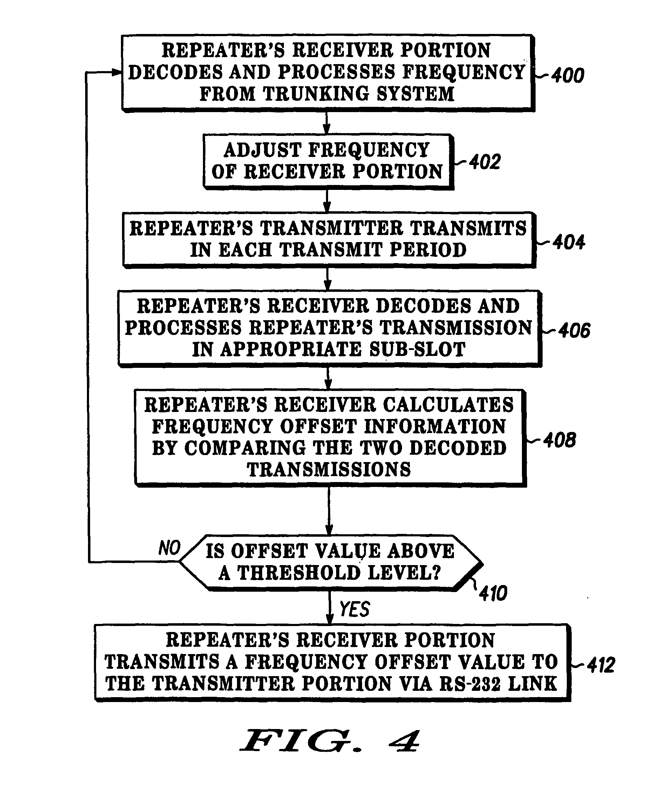

Turning now to FIG. 4, a flowchart of the synchronisation process is shown, in accordance with a preferred embodiment of the invention. The method includes the step of generally monitoring transmissions from the system, say in normal TETRA trunked mode, by the mobile repeater receiver portion. The repeater's receiver receives, decodes and processes frequency and/or timing information from the trunked system, as in step 400. If required, the receiver portion aligns its reference frequency and/or timing to the system's RF signal, received on the downlink from the TETRA BTS, as shown in step 402. In this manner, the BTS acts as the system's frequency reference before the repeater starts to transmit in a TDMA slotted mode.

In addition, the TETRA repeater needs to synchronise its transmitter chain to the system, with regard to both its reference oscillator frequency and/or timing. The repeater's transmitter transmits a frequency determination signal during each or any transmit period of the radio unit, preferably during a linearisation period, the CLCH, or other determined time-slot, time frame or frequency channel, as in step 404, to enable such synchronisation.

It is within the contemplation of the invention that, in addition to the repeater's receiver time-synchronising to the TETRA protocol, the receiver may send TETRA frequency and/or frame timing information to the repeater's transmit portion prior to each or any synchronisation determination transmissions.

The repeater's receiver is adapted to receive, decode and process the repeater transmitter's transmission during each or any synchronisation determination transmission of the radio unit, for example during a linearisation period, the CLCH, or other determined time-slot, time frame or frequency channel, as shown in step 406. The transmission is preferably made on the repeater's receive (RX) frequency. By comparing the system's frequency and/or timing information, to that of the repeater's transmitter, the repeater's receiver can calculate the necessary frequency and/or timing offset that is required, as in step 408.

In the preferred embodiment of the invention, the frequency offset of the repeater's transmitter transmission causes a proportional frequency shift ($F_O$) in the I/Q signal of the repeater's receiver portion. Hence, the repeater's receiver portion is able to measure the frequency and/or timing offset between the receiver's adapted frequency and/or timing and that of the repeater's transmitter, where:

$$F_O = f_{TX} - f_{RX} \qquad (4)$$

This will be repeated during each or any transmit period of the repeater. The frequency offset between the receive and transmit portions is then always known and can be corrected for in the transmit portion.

In the preferred embodiment of the invention, the frequency and/or timing offset required, is compared to a threshold value. If the offset is sufficient to require adjustment of the transmit portion, in step 410, then such adjustment is effected. In this manner, unnecessary adjustment of the transmit portion is avoided.

To accomplish any necessary adjustment, the repeater's receive portion sends a frequency and/or timing offset message, for example via a RS-232 serial interface to the transmit portion, as in step 412.

The preferred embodiment of the invention has been described with reference to a repeater unit synchronising its transmitter operating frequency and/or timing to that of a trunked communication system. In particular, such synchronisation enables a MS operating in a second operating mode, for example DMO, to communicate seamlessly into the trunked communication system. However, it is within the contemplation of the invention that the inventive concepts described herein can be equally applied to any wireless communication unit.aiming to synchronise its operating frequency and/or timing to that of a reference frequency and/or timing wirelessly transmitted to the wireless communication unit.

It will be understood that the wireless communication system, wireless communication unit and method of synchronisation described above provide at least the following advantages:

(i) synchronising to a wirelessly transmitted reference frequency and/or timing structure can be achieved and maintained by enhancing communication between elements within the wireless communication unit; and
(ii) the mechanism allows the use of two standard TETRA mobiles (without fast switching capability) to be connected through standard interfaces, such as RS-232, in a TETRA low cost repeater and gateway configuration.

In summary, a method of synchronising a wireless communication unit in a communication system has been described. The method includes, at the wireless communication unit, the steps of monitoring transmissions from a communication system and processing frequency and/or timing information from the communication system. The method further includes the steps of transmitting frequency and/or timing information by the wireless communication unit and receiving and processing the frequency and/or timing information transmitted by the wireless communication unit at a receiving portion of the wireless communication unit. Frequency and/or timing information, transmitted from the communication system, is compared to that transmitted by the wireless communication unit. The wireless communication unit is synchronised if the comparison step does not yield a match. In addition, a wireless communication unit and communication system adapted to perform any of the above synchronising steps has been described. A storage medium storing processor-implementable instructions for controlling one or more processors to carry out any of the above method steps has been described.

Also, a wireless communication unit has been described having a transmitter, transmitting frequency and/or timing information, operably coupled to a receiver. The receiver receives frequency and/or timing information transmitted from the communication system and frequency and/or timing information transmitted from the transmitter of the wireless communication unit. A processor, operably coupled to the receiver and said transmitter, processes the frequency and/or timing information and determines a frequency and/or timing offset between the frequency and/or timing information from the communication system and the transmitter. The processor then informs the transmitter of the offset.

**Claims**

1. A method of synchronising a wireless communication unit in a communication system, the method comprising at said wireless communication unit the steps of:

    monitoring wireless transmissions from a communication system;
    processing (400) frequency and/or timing information from the communication system; the method **characterised by** the steps of:

        wirelessly transmitting (404) frequency and/or timing information by said wireless communication unit;
        receiving and processing (406) said frequency and/or timing information transmitted by said wireless communication unit at a receiving portion of said wireless communication unit;
        comparing frequency and/or timing information transmitted from the communication system to that transmitted by said wireless communication unit; and
        synchronising said wireless communication unit with the frequency and/or timing of the system if said comparison step does not yield a match.

2. The method of synchronising according to claim 1, the method further comprising the step of:

    transmitting (412) a frequency and/or timing offset message from the receiving portion of said wireless communication unit to a transmitting portion of said wireless communication unit.

3. The method of synchronising according to claim 2, wherein said frequency and/or timing offset message is sent via a RS-232 serial interface.

4. The method of synchronising according to any preceding claim, wherein the step of comparing includes the step of calculating (408) a frequency and/or timing offset that is required to synchronise the wireless communication unit to the communication system.

5. The method of synchronising according to claim 4, wherein the step of calculating (408) a frequency and/or timing offset, includes the step of:

comparing (410) the calculated frequency and/or timing offset to a threshold value, and if said calculated frequency and/or timing offset exceeds said threshold value, adjusting a transmit portion of said wireless communication unit.

6. The method of synchronising according to any preceding claim, wherein the step of transmitting (404) frequency and/or timing information by said communicating unit transmission is made on a receive frequency of said wireless communication unit.

7. The method of synchronising according to claim 6, wherein the step of transmitting (404) frequency and/or timing information by said wireless communication unit is performed in one of the following: a signalling channel (SCH), a broadcast signalling channel (BSCH), a broadcast network channel (BNCH), a linearisation period in a traffic channel, or a common linearisation channel.

8. The method of synchronising according to claim 7, wherein said communication system is a trunked radio communication system employing a TETRA protocol with the wireless communication unit being a repeater unit facilitating communication between the trunked radio communication system and a plurality of mobile stations.

9. The method of synchronising according to claim 8, wherein the repeater unit synchronises transmissions between the trunked communication system and a second direct mode radio communication system, to facilitate the communication of at least one of the plurality of wireless communication units communicating in direct mode being passed to the trunked communication system.

10. The method of synchronising according to any preceding claim, wherein said receiving portion of said wireless communication unit sends frequency and/or timing information to the transmit portion of said wireless communication unit prior to a transmission of frequency and/or timing information.

11. The method of synchronising according to any preceding claim, the method further comprising the step of:

aligning (402) a reference frequency and/or timing of the wireless communication unit to the communication system's frequency and/or timing, in response to the step of processing said communication system's frequency and/or timing.

12. A wireless communication unit adapted to perform the synchronising steps of any of claims 1 to 11.

13. A communication system including a wireless communication unit adapted to perform the synchronising steps of any of claims 1 to 11.

14. A storage medium (308, 328) storing processor-implementable instructions for controlling one or more processors to carry out the method of any of claims 1 to 11.

15. A wireless communication unit comprising:

a transmitter (320) transmitting frequency and/or timing information; the wireless communication unit **characterised by**:

a receiver (310), operably coupled to said transmitter (320), receiving frequency and/or timing information wirelessly transmitted from a communication system (100) and said frequency and/or timing information wirelessly transmitted from said transmitter (320) of said wireless communication unit (112); and
a processor (308, 328), operably coupled to said receiver (310) and said transmitter (320), for processing said frequency and/or timing information and determining if a frequency and/or timing offset exists between said frequency and/or timing information from said communication system (100) and from said transmitter (320), and, if an offset exists, for synchronising said wireless communication unit with the frequency and/or timing of the system.

16. The wireless communication unit according to claim 15, further **characterised by**:

comparison means (308) operably coupled to said processor (308) for determining said frequency and/or timing offset between said frequency and/or timing information from said communication system (100) and said transmitter (320).

17. The wireless communication unit according to claim 16, further **characterised by**:

adjustment means (314) in the transmitter (320) to synchronise said frequency and/or timing of the wireless communication unit (112) if said comparison does not yield a match.

18. The wireless communication unit according to any of claims 15 to 17, wherein the receiver (310) forwards (412) a frequency and/or timing offset message to said transmitter (320) of said wireless communication unit (112) via a RS-232 serial interface (330).

19. The wireless communication unit according to any of claims 17 or 18, further comprising a memory element (316) operably coupled to said processor (308, 328) wherein said memory element (316) stores a threshold value to be used by the comparison means to determine whether the calculated frequency and/or timing offset exceeds said threshold value, and if said calculated frequency and/or timing offset exceeds said threshold value, said adjustment means adjusts said transmitter.

20. The wireless communication unit according to any of claims 15 to 19, wherein said communication system (100) is a trunked radio communication system employing a TETRA protocol and the wireless communication unit (112) is a repeater unit facilitating communication between the trunked radio communication system (100) and a plurality of mobile stations (114-116).

21. The wireless communication unit (112) according to any of claims 15 to 20, wherein said receiver (310) forwards frequency and/or timing information to the transmitter (320) prior to a transmission of frequency and/or timing information.

22. A communication system including a wireless communication unit according to any one of claims 15 to 21.

**Patentansprüche**

1. Verfahren zum Synchronisieren einer Einheit zur drahtlosen Kommunikation in einem Kommunikationssystem, wobei das Verfahren bei der Einheit zur drahtlosen Kommunikation die Schritte aufweist:

Überwachen von drahtlosen Übertragungen von einem Kommunikationssystem;
Verarbeiten (400) von Frequenz- und/oder Zeitsteuerungsinformationen von dem Kommunikationssystem;
wobei das Verfahren durch die Schritte **gekennzeichnet** ist:

drahtloses Übertragen (404) der Frequenz- und/oder Zeitsteuerungsinformationen durch die Einheit zur drahtlosen Kommunikation;
Empfangen und Verarbeiten (406) der Frequenz- und/oder Zeitsteuerungsinformationen, die durch die Einheit zur drahtlosen Kommunikation bei einem Empfangsabschnitt der Einheit zur drahtlosen Kommunikation übertragen werden;
Vergleichen der Frequenz- und/oder Zeitsteuerungsinformationen, die von dem Kommunikationssystem übertragen werden, mit denen, die durch die Einheit zur drahtlosen Kommunikation übertragen werden; und
Synchronisieren der Einheit zur drahtlosen Kommunikation mit der Frequenz und/oder Zeitsteuerung des Systems, wenn der Vergleichschritt keine Übereinstimmung ergibt.

2. Verfahren zum Synchronisieren gemäß Anspruch 1, wobei das Verfahren weiterhin den Schritt aufweist:

Übertragen (412) einer Frequenz- und/oder Zeitsteuerungs-Offset-Nachricht von dem Empfangsabschnitt der Einheit zur drahtlosen Kommunikation zu einem Übertragungsabschnitt der Einheit zur drahtlosen Kommunikation.

3. Verfahren zum Synchronisieren gemäß Anspruch 2, wobei die Frequenz- und/oder Zeitsteuerungs-Offset-Nachricht über eine serielle RS-232-Schnittstelle gesendet wird.

4. Verfahren zum Synchronisieren gemäß einem vorangehenden Anspruch, wobei der Schritt des Vergleichens den Schritt des Berechnens eines Frequenz- und/oder Zeitsteuerungs-Offsets umfasst, der erforderlich ist, um die Einheit zur drahtlosen Kommunikation mit dem Kommunikationssystem zu synchronisieren.

5. Verfahren zum Synchronisieren gemäß Anspruch 4, wobei der Schritt des Berechnens (408) eines Frequenz- und/oder Zeitsteuerungs-Offsets den Schritt umfasst:

Vergleichen (410) des berechneten Frequenz- und/oder Zeitsteuerungs-Offsets mit einem Schwellenwert und, wenn der berechnete Frequenz- und/oder Zeitsteuerungs-Offsets den Schwellenwert überschreitet, Einstellen eines Übertragungsabschnitts der Einheit zur drahtlosen Kommunikation.

6. Verfahren zum Synchronisieren gemäß einem vorangehenden Anspruch, wobei der Schritt des Übertragens (404) von Frequenz- und/oder Zeitsteuerungsinformationen durch die Kommunikationseinheitsübertragung auf einer Empfangsfrequenz der Einheit zur drahtlosen Kommunikation durchgeführt wird.

7. Verfahren zum Synchronisieren gemäß Anspruch 6, wobei der Schritt des Übertragens (404) von Frequenz- und/oder Zeitsteuerungsinformationen durch die Einheit zur drahtlosen Kommunikation in einem/einer der Folgenden ausgeführt wird: einem Signalisierungskanal (SCH), einem Rundsende-Signalisierungskanal (BSCH), einem Rundsende-Netzwerk-Kanal (BNCH), einer Linearisierungszeitspanne in einem Verkehrskanal oder einem gemeinsamen Linearisierungskanal.

8. Verfahren zum Synchronisieren gemäß Anspruch 7, wobei das Kommunikationssystem ein Bündelfunkkommunikationssystem ist, das ein TETRA-Protokoll verwendet, wobei die Einheit zur drahtlosen Kommunikation eine Repeater-Einheit ist, die die Kommunikation zwischen dem Bündelfunkkommunikationssystem und einer Vielzahl von Mobilstationen unterstützt.

9. Verfahren zum Synchronisieren gemäß Anspruch 8, wobei die Repeater-Einheit Übertragungen zwischen dem Bündelkommunikationssystem und einem zweiten Direkt-Modus-Funkkommunikationssystem synchronisiert, um die Weiterleitung der Kommunikation von zumindest einer der Vielzahl von Einheiten zur drahtlosen Kommunikation, die in dem Direkt-Modus kommuniziert, zu dem Bündelkommunikationssystem zu unterstützen.

10. Verfahren zum Synchronisieren gemäß einem vorangehenden Anspruch, wobei der Empfangsabschnitt der Einheit zur drahtlosen Kommunikation vor einer Übertragung von Frequenz- und/oder Zeitsteuerungsinformationen Frequenz- und/oder Zeitsteuerungsinformationen zu dem Übertragungsabschnitt der Einheit zur drahtlosen Kommunikation sendet.

11. Verfahren zum Synchronisieren gemäß einem vorangehenden Anspruch, wobei das Verfahren weiterhin den Schritt aufweist:

Angleichen einer Referenzfrequenz und/oder -Zeitsteuerung der Einheit zur drahtlosen Kommunikation an die Frequenz und/oder Zeitsteuerung des Kommunikationssystems, als Antwort auf den Schritt des Verarbeitens der Frequenz und/oder Zeitsteuerung des Kommunikationssystems.

12. Einheit zur drahtlosen Kommunikation, die geeignet ist, die Synchronisationsschritte von einem der Ansprüche 1 bis 11 auszuführen.

13. Kommunikationssystem, das eine Einheit zur drahtlosen Kommunikation umfasst, die geeignet ist, die Synchronisationsschritte von einem der Ansprüche 1 bis 11 auszuführen.

14. Speichermedium (308, 328), das prozessorimplementierbare Anweisungen zum Steuern eines oder mehrerer Prozessoren speichert, um das Verfahren nach einem der Ansprüche 1 bis 11 auszuführen.

15. Einheit zur drahtlosen Kommunikation, aufweisend:

eine Übertragungseinrichtung (320), die Frequenz- und/oder Zeitsteuerungsinformationen überträgt;
wobei die Einheit zur drahtlosen Kommunikation **gekennzeichnet ist durch**:

einen Empfänger (310), der mit der Übertragungseinrichtung (320) betriebsfähig gekoppelt ist und Frequenz- und/oder Zeitsteuerungsinformationen, die drahtlos von einem Kommunikationssystem (100) übertragen werden, und die Frequenz- und/oder Zeitsteuerungsinformationen, die drahtlos von der Übertragungseinrichtung (320) der Einheit zur drahtlosen Kommunikation (112) übertragen werden, empfängt; und
einen Prozessor (308, 328), der betriebsfähig mit dem Empfänger (310) und der Übertragungseinrichtung (320) gekoppelt ist, um die Frequenz- und/oder Zeitsteuerungsinformationen zu verarbeiten und um zu bestimmen, ob ein Frequenz- und/oder Zeitsteuerungs-Offset zwischen den Frequenz- und/oder Zeitsteuerungsinformationen von dem Kommunikationssystem (100) und von der Übertragungseinrichtung (320) existiert, und, wenn ein Offset existiert, um die Einheit zur drahtlosen Kommunikation mit der Frequenz- und/oder Zeitsteuerung des Systems zu synchronisieren.

16. Einheit zur drahtlosen Kommunikation gemäß Anspruch 15, weiterhin **gekennzeichnet durch:**

Vergleichsmittel (308), die betriebsfähig mit dem Prozessor (308) gekoppelt sind, um den Frequenz- und/oder Zeitsteuerungs-Offset zwischen den Frequenz- und/oder Zeitsteuerungsinformationen von dem Kommunikationssystem (100) und der Übertragungseinrichtung (320) zu bestimmen.

17. Einheit zur drahtlosen Kommunikation gemäß Anspruch 16, weiterhin **gekennzeichnet durch**:

Einstellmittel (314) in der Übertragungseinrichtung (320), um die Frequenz und/oder Zeitsteuerung der Einheit zur drahtlosen Kommunikation (112) zu synchronisieren, wenn der Vergleich keine Übereinstimmung ergibt.

18. Einheit zur drahtlosen Kommunikation gemäß einem der Ansprüche 15 bis 17, wobei der Empfänger (310) eine Frequenz- und/oder Zeitsteuerungs-Offset-Nachricht zu der Übertragungseinrichtung (320) der Einheit zur drahtlosen Kommunikation (112) über eine serielle RS-232-Schnittstelle (330) weiterleitet.

19. Einheit zur drahtlosen Kommunikation gemäß einem der Ansprüche 17 oder 18, weiterhin mit einem Speicherelement (316), das betriebsfähig mit dem Prozessor (308, 328) gekoppelt ist, wobei das Speicherelement (316) einen Schwellenwert speichert, der durch die Vergleichsmittel zu verwenden ist, um zu bestimmen, ob der berechnete Frequenz- und/oder Zeitsteuerungs-Offset den Schwellenwert überschreitet, wobei, wenn der berechnete Frequenz- und/oder Zeitsteuerungs-Offset den Schwellenwert überschreitet, die Einstellmittel die Übertragungseinrichtung einstellen.

20. Einheit zur drahtlosen Kommunikation gemäß einem der Ansprüche 15 bis 19, wobei das Kommunikationssystem (100) ein Bündelfunkkommunikationssystem ist, das ein TETRA-Protokoll verwendet, und die Einheit zur drahtlosen Kommunikation (112) eine Repeater-Einheit ist, die die Kommunikation zwischen dem Bündelfunkkommunikationssystem (100) und einer Vielzahl von Mobilstation (114-116) unterstützt.

21. Einheit zur drahtlosen Kommunikation (112) gemäß einem der Ansprüche 15 bis 20, wobei der Empfänger (310) vor einer Übertragung von Frequenz- und/oder Zeitsteuerungsinformationen Frequenz- und/oder Zeitsteuerungsinformationen zu der Übertragungseinrichtung (320) weiterleitet.

22. Kommunikationssystem mit einer Einheit zur drahtlosen Kommunikation gemäß einem der Ansprüche 15 bis 21.

**Revendications**

1. Procédé de synchronisation d'une unité de communication sans fil dans un système de communication, le procédé comprenant, au niveau de ladite unité de communication sans fil, les étapes de :

surveillance des émissions sans fil émanant d'un système de communication ;

traitement (400) d'informations de fréquence et/ou d'horloge provenant du système de communication ;

le procédé étant **caractérisé par** les étapes de :

émission sans fil (404) d'informations de fréquence et/ou d'horloge par ladite unité de communication sans fil ;

réception et traitement (406), au niveau d'une partie réception de ladite unité de communication sans fil, desdites informations de fréquence et/ou d'horloge émises par ladite unité de communication sans fil ;

comparaison des informations de fréquence et/ou d'horloge émises par le système de communication à celles qui ont été émises par ladite unité de communication sans fil ; et

synchronisation de ladite unité de communication sans fil avec la fréquence et/ou l'horloge du système si ladite étape de comparaison n'établit pas une correspondance.

2. Procédé de synchronisation selon la revendication 1, le procédé comprenant, en outre, l'étape de :

transmission (412) d'un message de décalage de fréquence et/ou d'horloge de la partie réception de ladite unité de communication sans fil à une partie émission de ladite unité de communication sans fil.

3. Procédé de synchronisation selon la revendication 2, dans lequel ledit message de décalage de fréquence et/ou d'horloge est envoyé via une interface série RS-232.

4. Procédé de synchronisation selon l'une quelconque des revendications précédentes, dans lequel l'étape de comparaison comprend l'étape de calcul (408) d'un décalage de fréquence et/ou d'horloge nécessaire pour synchroniser l'unité de communication sans fil avec le système de communication.

5. Procédé de synchronisation selon la revendication 4, dans lequel l'étape de calcul (408) d'un décalage de fréquence et/ou d'horloge comprend les étapes de :

comparaison (410) du décalage de fréquence et/ou d'horloge calculé à une valeur seuil, et, si ledit décalage de fréquence et/ou d'horloge excède ladite valeur seuil, réglage d'une partie émission de ladite unité de communication sans fil.

6. Procédé de synchronisation selon l'une quelconque des revendications précédentes, dans lequel l'étape d'émission (404) d'informations de fréquence et/ou d'horloge par ladite unité de communication est effectuée sur une fréquence de réception de ladite unité de communication sans fil.

7. Procédé de synchronisation selon la revendication 6, dans lequel l'étape d'émission (404) d'informations de fréquence et/ou d'horloge par ladite unité de communication sans fil est exécutée sur l'un des canaux suivants : un canal de signalisation (SCH), un canal de signalisation de diffusion (BSCH), un canal de réseau de diffusion (BNCH), une période de linéarisation dans un canal de trafic, ou un canal de linéarisation commun.

8. Procédé de synchronisation selon la revendication 7, dans lequel ledit système de communication est un système de communication à allocation dynamique des canaux, utilisant un protocole TETRA, l'unité de communication sans fil étant un répéteur facilitant la communication entre le système de communication à allocation dynamique des canaux et une pluralité de stations mobiles.

9. Procédé de synchronisation selon la revendication 8, dans lequel le répéteur synchronise les transmissions entre le système de communication à allocation dynamique des canaux et un deuxième système de communication en mode direct, pour faciliter le passage de la communication d'au moins l'une des différentes unités de communication sans fil communiquant en mode direct vers le système de communication à allocation dynamique des canaux.

10. Procédé de synchronisation selon l'une quelconque des revendications précédentes, dans lequel ladite partie réception de ladite unité de communication sans fil envoie des informations de fréquence et/ou d'horloge à la partie émission de ladite unité de communication sans fil avant une émission d'informations de fréquence et/ou d'horloge.

11. Procédé de synchronisation selon l'une quelconque des revendications précédentes, dans lequel le procédé comprend, en outre, les étapes de :

alignement (402) d'une fréquence et/ou horloge de référence de l'unité de communication sans fil sur la fréquence et/ou l'horloge du système de communication, en réponse à l'étape de traitement de ladite fréquence et/ou horloge du système de communication.

**12.** Unité de communication sans fil conçue pour exécuter les étapes de synchronisation selon l'une quelconque des revendications 1 à 11.

**13.** Système de communication comprenant une unité de communication sans fil conçue pour exécuter les étapes de synchronisation selon l'une quelconque des revendications 1 à 11.

**14.** Support de stockage (308, 328) stockant des instructions exécutables par un processeur pour commander un ou plusieurs processeurs de manière qu'ils exécutent le procédé selon l'une quelconque des revendications 1 à 11.

**15.** Unité de communication sans fil comprenant :

un émetteur (320) émettant des informations de fréquence et/ou d'horloge ;
l'unité de communication sans fil étant **caractérisée par** :

un récepteur (310), couplé de manière fonctionnelle audit émetteur (320), recevant des informations de fréquence et/ou d'horloge émises sans fil par un système de communication (100) et lesdites informations de fréquence et/ou d'horloge émises sans fil par ledit émetteur (320) de ladite unité de communication sans fil (112) ; et
un processeur (308, 328), couplé de manière fonctionnelle audit récepteur (310) et audit émetteur (320), pour traiter lesdites informations de fréquence et/ou d'horloge et déterminer s'il existe un décalage de fréquence et/ou d'horloge entre lesdites informations de fréquence et/ou d'horloge provenant dudit système de communication (100) et celle qui proviennent dudit émetteur (320), et, s'il existe un décalage, synchroniser ladite unité de communication sans fil avec la fréquence et/ou l'horloge du système.

**16.** Unité de communication sans fil selon la revendication 15, **caractérisée, en outre, par** :

des moyens de comparaison (308) couplés de manière fonctionnelle audit processeur (308) pour déterminer ledit décalage de fréquence et/ou d'horloge entre lesdites informations de fréquence et/ou d'horloge provenant dudit système de communication (100) et celles qui proviennent dudit émetteur (320).

**17.** Unité de communication sans fil selon la revendication 16, **caractérisée, en outre, par** :

des moyens de réglage (314) prévus dans l'émetteur (320), pour synchroniser ladite fréquence et/ou d'horloge de l'unité de communication sans fil (112) si ladite comparaison n'établit pas une correspondance.

**18.** Unité de communication sans fil selon l'une quelconque des revendications 15 à 17, dans laquelle le récepteur (310) transmet (412) un message de décalage de fréquence et/ou d'horloge audit émetteur (320) de ladite unité de communication sans fil (112) via une interface série RS-232 (330).

**19.** Unité de communication sans fil selon l'une quelconque des revendications 17 ou 18, comprenant, en outre, un élément de mémoire (316) couplé de manière fonctionnelle audit processeur (308, 328), où ledit élément de mémoire (316) stocke une valeur seuil à utiliser par les moyens de comparaison pour déterminer si le décalage de fréquence et/ou d'horloge calculé excède ladite valeur seuil, et, si ledit décalage de fréquence et/ou d'horloge calculé excède ladite valeur seuil, lesdits moyens de réglage règlent ledit émetteur.

**20.** Unité de communication sans fil selon l'une quelconque des revendications 15 à 19, dans laquelle ledit système de communication (100) est un système de communication à allocation dynamique des canaux, utilisant un protocole TETRA, et l'unité de communication sans fil (112) est un répéteur facilitant la communication entre le système de communication à allocation dynamique des canaux (100) et une pluralité de stations mobiles (114 - 116).

**21.** Unité de communication sans fil (112) selon l'une quelconque des revendications 15 à 20, dans laquelle ledit récepteur (310) transmet des informations de fréquence et/ou d'horloge à l'émetteur (320) avant une émission d'informations de fréquence et/ou d'horloge.

**22.** Système de communication comprenant une unité de communication sans fil selon l'une quelconque des revendications 15 à 21.

FIG. 1

FIG. 2

FIG. 3

REPEATER'S RECEIVER PORTION
DECODES AND PROCESSES FREQUENCY ⌐400
FROM TRUNKING SYSTEM

ADJUST FREQUENCY
OF RECEIVER PORTION ⌐402

REPEATER'S TRANSMITTER TRANSMITS
IN EACH TRANSMIT PERIOD ⌐404

REPEATER'S RECEIVER DECODES AND
PROCESSES REPEATER'S TRANSMISSION ⌐406
IN APPROPRIATE SUB-SLOT

REPEATER'S RECEIVER CALCULATES
FREQUENCY OFFSET INFORMATION
BY COMPARING THE TWO DECODED ⌐408
TRANSMISSIONS

NO ⟋ IS OFFSET VALUE ABOVE
A THRESHOLD LEVEL?
410

YES

REPEATER'S RECEIVER PORTION
TRANSMITS A FREQUENCY OFFSET VALUE TO ⌐412
THE TRANSMITTER PORTION VIA RS-232 LINK

*FIG. 4*